(19) Europäisches Patentamt
European Patent Office
Office européen des brevets

(11) Publication number: **0 443 760 A2**

(12) # EUROPEAN PATENT APPLICATION

(21) Application number: **91301106.0**

(22) Date of filing: **12.02.91**

(51) Int. Cl.[5]: **C08G 77/12**, C04B 35/00, C08G 77/06

(30) Priority: **22.02.90 US 483525**

(43) Date of publication of application: **28.08.91 Bulletin 91/35**

(84) Designated Contracting States: **BE DE ES FR GB IT NL**

(71) Applicant: **DOW CORNING CORPORATION**
**3091 S. Saginaw Road**
**Midland Michigan 48686-0994(US)**

(72) Inventor: **Baney, Ronald Howard**
**5704 Lantern Lane**
**Midland, Michigan(US)**
Inventor: **Chandra, Grish**
**801 Heathermoor**
**Midland, Michigan(US)**
Inventor: **Haluska, Loren Andrew**
**4510 James Drive**
**Midland, Michigan(US)**
Inventor: **Michael, Keith, Winton**
**2715 Siebert**
**Midland, Michigan(US)**

(74) Representative: **Horton, Sophie Emma et al**
**Elkington and Fife Beacon House 113 Kingsway**
**London WC2B 6PP(GB)**

(54) **Precursor polymer for ceramic coatings.**

(57) This invention relates to a method of hydrolyzing hydridosilanes of the formula $HSi(OR)_3$ to form a soluble resinous hydrolysate comprising a polymer having units of the formula $HSi(OH)_x(OR)_yO_{z/2}$, wherein each R is independently an organic group which, when bonded to the silicon through an oxygen atom, forms a hydrolyzable substituent, x = 0-2, y = 0-2, z = 1-3, x + y + z = 3 and the average value of y over all of the units of the polymer is greater than 0. The invention also relates to the soluble hydrolysates formed thereby as well as the method of using said hydrolysates to provide coatings on various substrates, including electronic devices, to form protective layers or inter-level dielectric layers in multilayered devices.

EP 0 443 760 A2

This invention relates to a method of hydrolyzing hydridosilanes of the formula $HSi(OR)_3$ to form a soluble resinous hydrolysate comprising a polymer having units of the formula $HSi(OH)_x(OR)_yO_{z/2}$, wherein each R is independently an organic group which, when bonded to silicon through the oxygen atom, forms a hydrolyzable substituent, x = 0-2, y = 0-2, z = 1-3, x + y + z = 3 and the average value of y over all of the units of the polymer is greater than 0. The invention also relates to the soluble polymer formed thereby as well as the method of using said polymer to provide coatings on various substrates, including electronic devices, to form protective layers or inter-level dielectric layers.

It is well known in the prior art that organotrialkoxysilanes dissolved in a solvent are readily hydrolyzed by water in an acidic environment. See, for example, Eaborn, "Organosilicon Compounds", Butterworth's Scientific Publications, London (1960) p 301. These hydrolysates are very unstable and are known to further condense upon formation to yield insoluble organopolysiloxane gels. Burzynski, U.S. Patent No. 4,223,121, column 1.

To solve the gelation problem associated with the condensation of organotrialkoxysilanes, Eaborn supra p230 states that it is impossible to lay down general rules but suggests using inert diluents, keeping the reaction temperature as low as possible and keeping the system as neutral as possible. Likewise, Burzynski supra, column 2, suggests that using formic acid in the hydrolysis of organotrialkoxysilanes will prevent gelation and that the incorporation of an alcohol, either as a by-product of the reaction or as an additional solvent, will result in a homogenous hydrolysate.

It has now been unexpectedly found that the process of the present invention provides a method for hydrolyzing hydridosilanes to form soluble resins which may be used to form ceramic or ceramic-like coatings.

This invention relates to a method of hydrolyzing hydridosilanes of the formula $HSi(OR)_3$ to form a soluble resinous hydrolysate, wherein each R is independently an organic group which, when bonded to silicon through the oxygen atom, forms a hydrolyzable substituent. The method comprises combining said hydridosilane, an oxygen containing polar organic solvent, water and an acid to form a mixture. Hydrolysis in the mixture is then facilitated for a time sufficient to hydrolyze or partially hydrolyze said hydrolyzable substituents without cleavage of the SiH bond to form said soluble hydrolysate.

The invention also relates to the hydrolysates formed by the above process as well as their use in forming ceramic or ceramic-like coatings on various substrates, especially electronic devices, to provide protective or inter-level dielectric layers.

The instant invention relates to a method of hydrolyzing hydridosilanes of the following formula:

$HSi(OR)_3$

R in this formula can be any organic group which, when bonded to silicon through the oxygen atom, forms a hydrolyzable substituent. Examples of such hydrolyzable groups include alkoxy such as methoxy, ethoxy, propoxy, butoxy or hexoxy; alkenoxy such as ethenoxy or propenoxy; cycloalkoxy such as cyclopentoxy or cyclohexoxy; aryloxy such as phenoxy; cycloalkenyloxy such as cyclopentoxy; and acyloxy such as acetoxy. The various organic radicals above can also be substituted, for example, by alkyls, aryls, halogens or alkoxy groups. It is generally preferred that the organic groups of the above radicals contain 1-6 carbon atoms, but groups with higher numbers of carbon atoms may also be used.

Preferably, the hydridosilane contains alkoxy hydrolyzable groups with 1-6 carbon atoms. Most preferably, the hydridosilane is triethoxysilane.

When the above hydridosilanes are subjected to the hydrolysis conditions described herein, the hydrolyzable substituents are at least partially replaced with hydroxyl groups and/or Si-O-Si linkages. The novelty of this invention resides in the fact that said hydrolysis occurs without cleavage of the Si-H bond and results in a soluble product.

The above hydridosilane is hydrolyzed in a mixture comprising an oxygen containing polar organic solvent, water and an acid. The oxygen containing polar organic solvent utilized herein should be a base capable of hydrogen bonding with the hydrolysate for stability. Furthermore, it should be capable of dissolving the hydridosilane and promoting its hydrolysis. Examples of suitable solvents include alcohols such as methanol, ethanol, isopropanol or butanol, polyols such as glycols, ethers such as ethyl ether, tetrahydrofuran or dioxane, ketones such as acetone or methyl ethyl ketone, esters such as methyl acetate or glycol ethers such as the monomethyl ether of ethylene glycol or the monomethyl ether of propylene glycol. In addition, the above solvents may also be mixed with various other miscible solvents such as toluene or xylene.

Generally, alcohols such as ethanol, isopropanol, butanol or mixtures thereof are the preferred solvents.

The solvent or solvents are generally used in such an amount that the hydridosilane is diluted to

between about 1 and about 50 weight percent solids, preferrably 10-20 weight percent solids. The entire amount of solvent may be included in the hydrolysis mixture or, preferably, the hydridosilane may be diluted to about 25 weight percent solids for hydrolysis and then the resultant hydrolysate further diluted to about 10-20 weight percent solids to provide additional stability.

Water is also included in the hydrolysis mixture in an amount effective to hydrolyze or partially hydrolyze the hydridosilane. The amount of water necessary for complete hydrolysis can be calculated in the following manner: 1 mole of water hydrolyzes 2/3 mole of hydridosilane by the following reactions:

$H_2O + HSi(OR)_3 = HSi(OH)(OR)_2 + ROH$

$$HSi(OH)(OR)_2 + HSi(OR)_3 = \begin{array}{c} OR \quad\;\; OR \\ | \qquad\quad | \\ HSi\text{-}O\text{-}SiH \\ | \qquad\quad | \\ OR \quad\;\; OR \end{array} + ROH$$

Therefore, 1.5 moles of water are needed to completely hydrolyze every mole of hydridosilane.

Generally, the stability of the hydrolysate is increased when the amount of water is limited so that only partial hydrolysates are formed. For instance, when the molar water:hydridosilane ratio is 0.75:1, only about 1/2 of the hydrolyzable groups are removed with the resultant solution remaining non-gelled greater than 14 months. When the water:hydridosilane ratio is increased to greater than 2:1, nearly complete hydrolysis occurs and the solution gels after 15-30 days. Therefore, it is generally preferred that the molar water:hydridosilane ratio be less than about 5:1 and most preferred when the ratio is less than about 2:1.

An acid or mixture of acids are also included in the hydrolysis mixture to both catalyze the hydrolysis reaction and stabilize the hydrolyzate once formed. Generally, most inorganic acids and some organics will function herein. Examples of suitable agents include the hydrogen halides such as HCl or HF, nitric, sulfuric or carboxylic acids such as acetic. They may be utilized in a concentrated or dilute form in an amount which will acidify the reaction medium. Generally, amounts of greater than about 0.1 weight percent of a 5% aqueous acid solution will be effective with greater than about 0.4 weight percent of said dilute solution being more preferred.

Once the appropriate amounts of reactants have been calculated, they are combined to form a hydrolysis mixture. Any order of mixing the reactants will usually be effective but generally, the hydridosilane is dissolved in the solvent and then the acid and water added to the solution.

Some hydrolysis usually occurs when the above components are combined. To increase the rate and extent of reaction, however, various facilitating measures such as temperature-control and/or stirring are utilized. For example, stirring the mixture with the application of mild heat in the range of 40-100 ° C. for 0.1-24 hours will generally produce a desirable hydrolysate.

In addition to the hydridosilane, modifying ceramic oxide precursors may also be included in the above mixture and cohydrolyzed to a hydrolysate containing modifying ceramic oxides. The modifying ceramic oxide precursors included in this invention may be, for example, compounds of various metals such as zirconium, titanium, aluminum, tantalum, niobium and/or vanadium as well as various non-metallic compounds such as those of boron or phosphorous. The expression "modifying ceramic oxide precursor", therefore, is meant to include such metal and non-metal compounds having one or more hydrolyzable groups bonded to the above metal or non-metal. Examples of hydrolyzable groups include, but are not limited to alkoxy, such as methoxy, ethoxy, propoxy etc, acyloxy, such as acetoxy or other organic groups bonded to said metal or non-metal through an oxygen. These compositions must be capable of being hydrolyzed, and subsequently pyrolyzed, to modifying ceramic oxide coatings. The modifying ceramic oxide precursor is generally present in an amount such that the final ceramic coating contains 0.1 to 30% modifying ceramic oxide.

In the case of highly reactive modifying ceramic oxide precursors which contain substituents such as propoxides, isopropoxides, butoxides, isobutoxides or acetylacetonates, the modifying ceramic oxide precursors and hydridosilanes can be premixed and heated to reflux in ethanol for 24 hours to afford a homogenous reaction mixture which can be hydrolyzed uniformly and at a controlled rate. However, attempts to pre-hydrolyze a mixture of the above mentioned highly reactive modifying ceramic oxide precursors and a hydridosilane without the condensation reaction results in preferential and rapid hydrolysis of the modifying ceramic oxide precursor over that of the hydridosilane, resulting in rapid, non-homogenous gelation of the reaction mixture.

An alternative method of cohydrolyzing the reactive modifying ceramic oxide precursors would be to

hydrolyze the hydridosilane as disclosed supra, followed by adding the reactive modifying ceramic oxide precursor and less than or equal to a stoichiometric amount of water for hydrolyzing said modifying ceramic oxide precursor to the hydrolysate solution. When the hydrolysis of this mixture is facilitated as discussed supra, a uniform, soluble hydrolysate results.

The above hydrolysate or cohydrolysate mixtures may also be catalyzed by the simple addition of a platinum or rhodium catalyst which assists in increasing the rate and extent of ceramification. Any platinum or rhodium compound or complex which can be solubilized in this mixture will be operable. For instance, an organoplatinum composition such as platinum acetylacetonate or rhodium catalyst $RhCl_3[S(CH_2CH_2CH_2CH_3)_2]_3$, obtained from Dow Corning Corporation, Midland, Michigan, U.S.A., are all within the scope of this invention. The above catalysts are generally added to the solution in an amount of between about 15 to 200 ppm platinum or rhodium based on the weight of resin in solution.

During the formation of the hydrolysate, partial condensation is likely to spontaneously occur. The resultant resinous hydrolysate, therefore, is a polymer containing units of the formula:

$$HSi(OH)_x(OR)_yO_{z/2}$$

wherein R is as defined in the hydridosilane, x = 0-2, y = 0-2, z = 1-3, x + y + z = 3 and the average value of y over all of the units of the polymer is greater than zero. The resin is soluble in the acidified solvents disclosed herein and its stability contingent primarily on the degree of hydrolysis and condensation.

Upon heating to temperatures above 200°C. in air or above 40°C. in ozone, the above resins are converted to smooth layers of amorphous silica without pinholes or cracks. These layers have found particular utility in coating electronic circuits wherein they may serve as a protective planarizing coating to preserve the integrity of the circuits against environmental stress or they may function as a dielectric for use in multilayered devices. They may be applied directly on the circuit surface or they may be applied on a primary passivated circuit surface to seal the bond pads, pinholes and cracks of the primary passivation. These coatings also provide an adherent surface for subsequently applied coatings.

The resins of the invention are generally applied to the surface of the electronic device in the form of a dilute solution by methods such as spin coating, dip coating, spray coating or flow coating. The solvent is then allowed to evaporate by drying to form a homogenous resin which is then ceramified by heating. The thin ceramic layers thereby formed may be further coated with additional passivating and/or barrier layers as described in U.S. Patent No. 4,753,855.

The resins of the invention are also particularly advantageous in the formation of dielectric layers in multilayered devices. When used for such applications, the coatings formed by the methods described supra are deposited between the metallization layers of said devices.

The following nonlimiting examples are provided so that one skilled in the art may more fully understand the invention.

## Example 1

2.0 g of $HSi(OCH_2CH_3)_3$, 8.1 g of ethanol, 0.66 g of water and 1 drop of 5% aqueous HCl were combined to form a solution. The solution was stirred and heated to 60-74°C. The stirred solution was maintained at temperature for 30 minutes and then allowed to cool. A soluble hydrolysate solution which did not gel for 4 days resulted. The IR spectra of this solution after spin coated on a 2.54 cm square (1 inch square) silicon wafer showed strong bands at 870 $cm^{-1}$ and 2245 $cm^{-1}$ indicative of Si-H, a strong band at 1062 $cm^{-1}$ indicative of Si-O-Si and a strong band at 1100 $cm^{-1}$ indicative of Si-O-C.

The above solution was flow coated on a 2.54 cm x 7.62 cm (1" x 3") aluminum panel. The coated panel was air dried for 20 minutes, placed in a Lindberg furnace and the temperature in the furnace raised to 400°C. Pyrolysis at 400°C. for 1 hour resulted in a bright and transparent coating.

A 2.54 cm square (1" square) IR transparent silicon wafer and 2 Motorola 14011B CMOS devices were spin coated with the above solution at 3000 RPM for 10 seconds. Both the wafer and the devices were pyrolyzed in the same manner as above. The coatings on the CMOS devices appeared flaw free at 80 X magnification and both devices remained functional. The FTIR spectra on the silicon wafer showed the typical Si-O-Si band at 1062$cm^{-1}$ and the absence of the Si-H band at 2245$cm^{-1}$ (indicating removal of SiH). This spectra appeared similar to a silicon wafer coated with hydrogen silsesquioxane resin and pyrolyzed in the same manner.

## Example 2

2.0 g of $HSi(OCH_2CH_3)_3$, 6.1 g of isopropyl alcohol (IPA), 1.0 g of n-butanol, 1.037 g of water and 1 drop of 5% aqueous HCl were combined to form a solution. The solution was stirred and heated to 60-74° C. The stirred solution was maintained at temperature for 30 minutes and then allowed to cool. A soluble hydrolysate solution which did not gel for 15 days resulted.

Example 3

2.293 g of $HSi(OCH_2CH_3)_3$, 6.3 g of isopropyl alcohol (IPA), 2.1 g of n-butanol, 0.502 g of water and 1 drop of 5% aqueous HCl were combined to form a solution. The solution was stirred and heated to 60-74° C. The stirred solution was maintained at temperature for 30 minutes and then allowed to cool. A soluble hydrolysate solution which did not gel for 15 days resulted.

Example 4

2.0 g of $HSi(OCH_2CH_3)_3$, 6.1 g of isopropyl alcohol (IPA), 2.0 g of n-butanol, 0.66 g of water and 1 drop of 5% aqueous HCl were combined to form a solution. The solution was stirred and heated to 60-74° C. The stirred solution was maintained at temperature for 30 minutes and then allowed to cool. A soluble hydrolysate solution which was stable for 15 days resulted.

Example 5

0.129 g of $HSi(OCH_2CH_3)_3$, 6.1 g of isopropyl alcohol (IPA), 2.0 g of n-butanol, 0.11 g of water and 1 drop of 5% aqueous acetic acid were combined to form a solution. The solution was stirred and heated to 60-74° C. The stirred solution was maintained at temperature for 30 minutes and then allowed to cool. A soluble hydrolysate solution which did not gel for 1 day resulted.

Example 6

8.0 g of $HSi(OCH_2CH_3)_3$, 24.1 g of IPA and 1.71 g of water which included 7 drops of 5% aqueous nitric acid were combined to form a solution. The solution was stirred and heated to 60-75° C. The stirred solution was maintained at temperature for 6 hours 45 minutes and then allowed to cool. 8 g of n-butanol was then added to the solution while stirring. An ungelled hydrolysate solution resulted.

The above solution was flow coated on a 2.54 cm x 7.62 cm (1" x 3") aluminum panel. The coated panel was air dried for 20 minutes, placed in a Lindberg furnace and the temperature in the furnace raised to 400° C. Pyrolysis at 400° C. for 1 hour resulted in a bright and transparent coating.

Example 7

8.0 g of $HSi(OCH_2CH_3)_3$, 24.2 g of IPA and 1.71 g of water which included 7 drops of 5% aqueous sulfuric acid were combined to form a solution. The solution was stirred and heated to 60-75° C. The stirred solution was maintained at temperature for 45 minutes and then allowed to cool. 8 g of n-butanol was then added to the solution while stirring. An ungelled hydrolysate solution resulted.

The above solution was flow coated on a 2.54 cm x 7.62 cm (1" x 3") aluminum panel. The coated panel was air dried for 20 minutes, placed in a Lindberg furnace and the temperature in the furnace raised to 400° C. Pyrolysis at 400° C. for 1 hour resulted in a bright and transparent coating.

Example 8

8.2 g of $HSi(OCH_2CH_3)_3$, 24.2 g of IPA, 0.7 g of water and 4 drops of 5% aqueous acetic acid were added to a Ehrlenmeyer flask. The solution was stirred with a magnetic stirrer and heated to 60° C. The stirred solution was maintained at temperature for 30 minutes and then allowed to cool. An ungelled hydrolysate solution resulted.

The above solution was flow coated on a Q-panel. The coated panel was air dried for 15 minutes to give a smooth yellow coating.

The above solution was then diluted with 8 g of n-butanol. 70 days later the diluted solution remained ungelled. A Q-panel was coated with this solution and pyrolyzed 1.5 hours at 400° C. to yield a transparent coating.

Example 9

4.0 g of $HSi(OCH_2CH_3)_3$, 12.2 g of IPA, 4.0 g of n-butanol and 0.33 g of water which included 1 drop of 5% aqueous HCl were combined to form a solution. The solution was stirred and heated to 60-75° C. The stirred solution was maintained at temperature for 30 minutes and then allowed to cool. A soluble hydrolysate solution which did not gel for over 14 months resulted. An IR spectra of this solution spin coated on a silicon wafer showed strong bands at 870 $cm^{-1}$ and 2245 $cm^{-1}$ indicative of Si-H, a strong band at 1062 $cm^{-1}$ indicative of Si-O-Si and a strong band at 1100$cm^{-1}$ indicative of Si-O-C.

A 2.54 cm square (1" square) IR transparent silicon wafer was spin coated with the above solution at 3000 RPM for 35 seconds. The wafer was pyrolyzed by placing it in a domed steel reactor with a 3.0% ozone environment, raising the temperature in the reactor to 200° C. and pyrolyzing at this temperature for 5 hours. A transparent coating 2184 angstrom thick was formed. The FTIR spectra of this coating showed the typical Si-O-Si band at 1062$cm^{-1}$ and the absence of the Si-H band at 2245$cm^{-1}$ (indicating removal of SiH). Some residual silanol is indicated by the band at 920$cm^{-1}$.

Example 10

8.0 g of $HSi(OCH_2CH_3)_3$, 24.2 g of IPA, 8.0 g of n-butanol and 0.87 g of water which included 3 drops of 5% aqueous HCl were combined to form a solution. The solution was stirred and heated to 60-75° C. The stirred solution was maintained at temperature for 2 hours and then allowed to cool. An ungelled hydrolysate solution resulted. An IR spectra of this solution spin coated on a silicon wafer showed strong bands at 870 $cm^{-1}$ and 2245 $cm^{-1}$ indicative of Si-H, a strong band at 1062 $cm^{-1}$ indicative of Si-O-Si and a strong band at 1100$cm^{-1}$ indicative of Si-O-C.

4.95 g of the above solution was intimately mixed with 0.5 g of 0.1237% platinum as platinum 2,4-pentanedionate. A 2.54 cm square (1" square) IR transparent silicon wafer was spin coated with this solution at 3000 RPM for 35 seconds. The wafer was pyrolyzed by placing it in a domed steel reactor with a 3.0% ozone environment, raising the temperature in the reactor to 200° C. and pyrolyzing at this temperature for 5 hours. A transparent coating 1249 angstrom thick was formed. The FTIR spectra of the coating showed the typical Si-O-Si band at 1062$cm^{-1}$ and the absence of the Si-H band at 2245$cm^{-1}$ (indicating removal of SiH). The traces of residual silanol, indicated by the band at 920$cm^{-1}$, were less than those of Example 10 which contained no platinum catalyst.

Example 11

4.0 g of $HSi(OCH_2CH_3)_3$, 12.1 g of IPA and 0.85 g of water which included 4 drops of 5% aqueous nitric acid were combined to form a solution. The solution was stirred and heated to 60-75° C. for 45 minutes. 0.399 g of $VO(OCH_2CH_2CH_3)_3$ and 4.0 g of n-butanol was then added to the solution and stirred until homogenous. The solution was then allowed to cool. An ungelled hydrolysate solution resulted. An IR spectra of this solution spin coated on a silicon wafer showed strong bands at 870 $cm^{-1}$ and 2245 $cm^{-1}$ indicative of Si-H, a strong band at 1062 $cm^{-1}$ indicative of Si-O-Si and a strong band at 1100$cm^{-1}$ indicative of Si-O-C.

A 2.54 cm square (1" square) IR transparent silicon wafer was spin coated with the above solution at 3000 RPM for 35 seconds. The wafer was pyrolyzed by placing it in a domed steel reactor with a 3.0% ozone environment, raising the temperature in the reactor to 185-190° C. and pyrolyzing at this temperature for 3 hours. A transparent coating 1669 angstroms thick was formed. The refractive index of the coating was 1.484. The FTIR spectra of this coating showed the typical Si-O-Si band at 1062$cm^{-1}$ and the absence of the Si-H band at 2245$cm^{-1}$ (indicating removal of SiH). Some residual silanol is indicated by the band at 920$cm^{-1}$.

Example 12

8.0 g of $HSi(OCH_2CH_3)_3$, 32.2 g of 1,2-dimethoxyethane (dried over 4 angstrom molecular sieves), 1.32 g of water and 5 drops of 5% aqueous nitric acid were combined to form a solution. The solution was stirred and heated to about 40° C. and maintained for 1 hour. The solution was then allowed to cool and stored for 24 hours. An ungelled hydrolysate solution resulted.

The above solution was flow coated on a 2.54 cm x 7.62 cm (1" x 3") aluminum panel. The coated panel was air dried for 20 minutes, placed in a Lindberg furnace and the temperature in the furnace raised to 400° C. Pyrolysis at 400° C. for 1 hour resulted in a bright and transparent coating.

Example 13

8.0 g of $HSi(OCH_2CH_3)_3$, 32.2 g of methylethylketone (dried over 4 angstrom molecular sieves), 1.32 g of water and 5 drops of 5% aqueous nitric acid were combined to form a solution. The solution was stirred and heated to about 40 ° C. and maintained for 1 hour. The solution was then allowed to cool and stored for 24 hours. An ungelled hydrolysate solution resulted. aluminum panel. The coated panel was air dried for 20

The above solution was flow coated on a 2.54 cm x 7.62 cm (1" x 3") minutes, placed in a Lindberg furnace and the temperature in the furnace raised to 400 ° C. Pyrolysis at 400 ° C. for 1 hour resulted in a bright and transparent coating.

Example 14 (Comparative example with excess water)

2.0 g of $HSi(OCH_2CH_3)_3$, 6.1 g of IPA, 2.0 g of water and 1 drop of 5% aqueous nitric acid were combined to form a solution. The solution was stirred and heated to about 40 ° C. The stirred solution was maintained at temperature for 1 hour and then allowed to cool. 1 g of n-butanol was then added to the solution while stirring. A soluble solution which did not gel for 4 days resulted.

The above solution was flow coated on a 2.54 cm x 7.62 cm (1" x 3") aluminum panel. The film thereby applied was poor quality with gel particles and an uneven coat. The coated panel was air dried for 20 minutes, placed in a Lindberg furnace and the temperature in the furnace raised to 400 ° C. Pyrolysis at 400 ° C. for 1 hour resulted in a highly cracked poor quality coating.

Table 1 - Summary of Examples

| Ex. No. | Silane (g) | Alcohol (g) | Water (g) | Acid | Molar Water:Silane Ratio | Stability |
|---|---|---|---|---|---|---|
| 1 | 2.0 | 8.1 Eth | 0.66 | 5% HCl 1 gtt | 3:1 | 4 days |
| 2 | 2.0 | 6.1 IPA 1.0 But | 1.037 | 5% HCl 1 gtt | 4.7:1 | 15 days |
| 3 | 2.29 | 6.3 IPA 2.1 But | 0.502 | 5% HCl 1 gtt | 2:1 | 15 days |
| 4 | 2.0 | 6.1 IPA 2.0 But | 0.66 | 5% HCl 1 gtt | 3:1 | 15 days |
| 5 | 0.13 | 6.1 IPA 2.0 But | 0.011 | 5% Acetic | 0.77:1 | 1 day |
| 6 | 8.0 | 24.1 IPA 8.0 But | 1.71 | 5% Nitric 7 gtt | 2:1 | 18 days |
| 7 | 8.0 | 24.2 IPA 8.0 But | 1.71 | 5% H2SO4 7 gtt | 2:1 | 18 days |
| 8 | 8.2 | 24.2 IPA 8.0 But | 0.7 | 5% Acetic 4 gtt | 0.75:1 | 14 days |
| 9 | 4.0 | 12.4 IPA 4.0 But | 0.33 | 5% HCl 1 gtt | 0.75:1 | 14 months |
| 10 | 8.0 | 24.2 IPA 8.0 But | 0.87 | 5% HCl 3 gtt | 1:1 | 75 days |
| 11 | 4.0* | 12.1 IPA 4.0 But | 0.85 | 5% nitric 4 gtt | 2:1 | ---- |
| 12 | 8.0 | 32.2 DME | 1.32 | 5% nitric 5 gtt | 1.5:1 | ---- |
| 13 | 8.0 | 32.2 MEK | 1.32 | 5% nitric 5 gtt | 1.5:1 | ---- |
| 14 | 2.0 | 6.1 IPA 1.0 But | 2.0 | 5% nitric 1 gtt | 9:1 | ---- |

Silane = Triethoxysilane, Eth = ethanol, IPA = isopropyl alcohol, But = n-butanol, DME = 1,2 dimethoxyethane and MEK = methylethylketone
* = 0.399 g $VO(CH_2CH_2CH_3)_3$ additionally added

## Claims

1. A method of hydrolyzing a hydridosilane of the formula $HSi(OR)_3$ to form a soluble resinous hydrolysate wherein each R is independently an organic group which, when bonded to silicon through the oxygen atom, forms a hydrolyzable substituent, the method comprising:

   combining components comprising said hydridosilane, an oxygen containing polar organic solvent, water and an acid to form a mixture; and

facilitating hydrolysis of said hydridosilane in the mixture for a time sufficient to hydrolyze or partially hydrolyze said hydridosilane.

**2.** The method of claim 1 wherein the water is present in an amount less than about a 5:1 molar ratio of water:hydridosilane; said acid is selected from the group consisting of hydrogen halides, carboxylic, nitric and sulfuric; and wherein said hydrolyzable substituent is independently selected from the group consisting of alkoxy, alkenoxy, aryloxy and acyloxy.

**3.** The method of claim 2 wherein said solvent is an alcohol or mixture of alcohols and a modifying ceramic oxide precursor is additionally added to said mixture.

**4.** The method of claim 2 wherein a platinum or rhodium catalyst is added to a solution of said hydrolysate or partial hydrolysate.

**5.** The method of claim 1 wherein the oxygen containing polar organic solvent is also mixed with an additional miscible solvent.

**6.** A soluble resinous hydrolysate comprising a polymer having units of the formula $HSi(OH)_x(OR)_yO_{z/2}$, wherein each R is independently an organic group which, when bonded to silicon through the oxygen atom, forms a hydrolyzable substituent, x = 0-2, y = 0-2, z = 1-3, x + y + z = 3 and the average value of y over all of the units of the polymer is greater than 0.

**7.** The hydrolysate of claim 6 dissolved in a solvent.

**8.** The hydrolysate of claim 6 wherein a platinum or rhodium catalyst is additionally present.

**9.** A soluble resinous cohydrolysate comprising a polymer having units of the formula $HSi(OH)_x(OR)_yO_{z/2}$ and modifying ceramic oxide units, wherein each R is independently an organic group which, when bonded to silicon through the oxygen atom, forms a hydrolyzable substituent, x = 0-2, y = 0-2, z = 1-3, x + y + z = 3, the average value of y over all of the units of the polymer is greater than 0 and the modifying ceramic oxide unit is the condensed hydrolysate of a modifying ceramic oxide precursor comprising an element selected from the group consisting of titanium, zirconium, aluminum, tantalum, vanadium, niobium, boron and phosphorous with at least one hydrolyzable substituent selected from the group consisting of alkoxy or acyloxy.

**10.** A method of forming a ceramic or ceramic like coating on a substrate comprising:
coating said substrate with a solution comprising a solvent and a hydrolysate of claim 6;
evaporating said solvent to thereby deposit a preceramic coating on said substrate; and
ceramifying said preceramic coating by heating the coated substrate to a temperature of between about 40 to about 1000°C.

**11.** The method of claim 10 wherein said substrate is an electronic device.